# EUROPÄISCHE PATENTANMELDUNG

(11) **EP 0 681 946 A1**
(43) Veröffentlichungstag der Anmeldung: **15.11.1995**
(21) Anmeldenummer: 95103801.7
(22) Anmeldetag: 16.03.1995
(51) Int. Cl.: B60R 21/20

(54) **Airbag-Baueinheit**

(30) Priorität: 14.05.1994 DE 4417056
(71) Anmelder: PARS Passive Rückhaltesysteme GmbH, 63755 Alzenau (DE)
(72) Erfinder: Herold, Jürgen, D-63743 Aschaffenburg (DE)
(74) Vertreter: Rieger, Harald, Dr.

(57) **Zusammenfassung**

Bei einer Airbag-Baueinheit ist der an einer Trägerstruktur befestigte Gasgenerator (1) mit dem Gassack (5) und dessen Abdeckkappe (6) verbunden.

Um die Airbag-Baueinheit aus wenigen Einzelteilen aufbauen zu können, ist um die Gasaustrittsöffnung (2) des Gasgenerators (1) ein Flansch (3) mit auf der Rückseite festen Gewindebolzen (4) angeordnet. Der Gassack (5) ist auf den Flansch (3) und die Gasaustrittsöffnung (2) aufgefaltet. Die Randzone (8) der Gaseintrittsöffnung des Gassacks sowie ein an der Öffnung der Abdeckkappe angebrachter Innenflansch (7) sind auf die Gewindebolzen (4) aufgezogen.

## Beschreibung

Die Erfindung betrifft eine Airbag-Baueinheit, deren an einer Trägerstruktur befestigbarer Gasgenerator mit dem Gassack und der Abdeckkappe des Gassacks verbunden ist.

Die heute üblichen Airbag-Baueinheiten besitzen als tragendes Element einen Gasgeneratorträger, der neben dem Gasgenerator noch den eingefalteten Gassack und dessen Arretierungsblech (Flanschblech) aufnimmt. Eine rund um den Gasgeneratorträger verlaufende Klammerleiste hält die im allgemeinen aus elastischem Kunststoff bestehende Abdeckkappe des Gassacks fest. Der Gasgenerator und dessen Sicherungsblech sind gegen den Gasgeneratorträger geschraubt und unlösbar vernietet. Der Deckel der Abdeckkappe reißt unter dem Druck des sich aufblasenden Gassacks entlang genau definierter Sollbruchlinien auf, wo die Wanddicke der Abdeckkappe, die im allgemeinen 3 bis 6 mm beträgt, auf 0,25 bis 0,75 mm verringert ist. Die Deckelabschnitte sind mit dem Mantel der Abdeckkappe durch eine Wandreduzierung auf 0,3 bis 2,0 mm gelenkartig verbunden. Der Gasgeneratorträger kann sowohl aus tiefziehfähigem Stahl, aus Aluminiumwerkstoff oder aus Kunststoff gefertigt sein. (Technisches Handbuch, Heft 20, S. 6/7, Kolbenschmidt AG, Neckarsulm, 1990).

Es ist die Aufgabe der vorliegenden Erfindung, eine Airbag-Baueinheit bereitzustellen, die aus wenigen, mit wenigen Fertigungsschritten vereinigten Einzelteilen besteht und deren Gestalt montagegerecht hinsichtlich Handhabung, Positionierung, Fügen und Sichern ist.

Die Lösung dieser Aufgabe erfolgt durch die im Anspruch 1 aufgeführten Merkmale.

In den Unteransprüchen sind weitere Ausgestaltungsformen der Airbag-Baueinheit wiedergegeben.

Die Erfindung ist in den Zeichnungen beispielhaft dargestellt und wird nachfolgend näher erläutert.

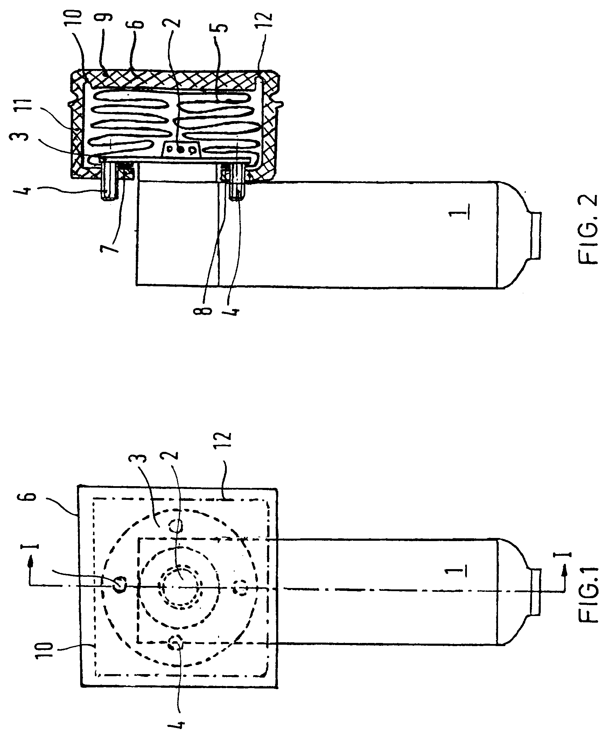

In Fig. 1 ist eine Vorderansicht und in Fig. 2 ein Längsschnitt entlang der Schnittlinie I-I der Fig. 1 der Airbag-Baueinheit wiedergegeben. Diese Airbag-Baueinheit ist im Fahrzeugsitz oder in der Seitenstruktur eines Personenkraftwagens einfügbar und dient dem Schutz der Fahrzeuginsassen gegen einen Seitenaufprall. Die Airbag-Baueinheit besteht aus einem flaschenförmigen, mit Druckluft gefüllten Gasgenerator (1) mit einer seitlich im Mantel angeordneten Gasaustrittsöffnung (2), um die herum ein fester Flansch (3) angebracht ist. Auf der Rückseite des Flansches (3) befinden sich mehrere feste Gewindebolzen (4), mit denen die Airbag-Baueinheit an einer Trägerstruktur befestigt wird. Der Gassack (5) ist in mehreren Faltlagen auf den Flansch (3) und auf die Gasaustrittsöffnung (2) aufgefaltet und von einer kastenförmigen, aus einem thermoplastischen Elastomer bestehenden Abdeckkappe (6) umgeben, deren offene Bodenfläche durch einen Innenflansch (7) begrenzt ist. Die die Gaseintrittsöffnung des Gassacks (5) begrenzende Randzone (8) sowie der Innenflansch (7) der Abdeckkappe (6) weisen jeweils mehrere Durchgangslöcher auf, mittels der der Gassack (5) und die Abdeckkappe (6) auf die Gewindebolzen (4) aufgezogen sind. Der Deckel (9) der Abdeckkappe (6) ist entlang einer Kante (10) durch eine entsprechende Wanddickenreduzierung der Abdeckkappe (6) gelenkartig mit ihrem Mantel (11) verbunden. Entlang der übrigen Kanten des Deckels (9) ist die Wanddicke der Abdeckkappe (6) unter Bildung von Sollreißlinien (12) so stark reduziert, daß der sich aufblähende Gassack (5) den Deckel (9) der Abdeckkappe (6) aufreißt, der Deckel (9) nach oben geklappt wird und damit der Gassack (5) ungehindert in den Innenraum des Personenkraftwagens austreten kann.

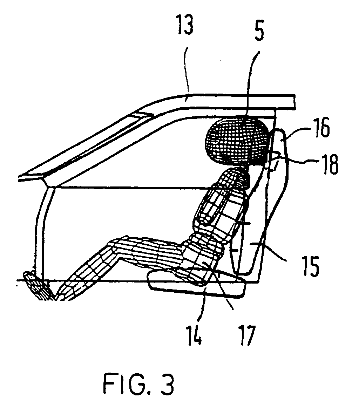

Fig. 3 zeigt den vorderen Teil des Insassenraums eines Personenkraftwagens (13) mit einem aus Sitzkissen (14), Rückenlehne (15) mit integrierter Kopfstütze (16) bestehenden Fahrersitz mit einer darauf sitzenden anthropromorphen Prüfpuppe (17). In der Seitenfläche des Fahrzeugsitzes ist im Übergangsbereich zwischen der Rückenlehne (15) und der Kopfstütze (16) hinter der Verkleidung der Seitenfläche eine erfindungsgemäße Airbag-Baueinheit (18) angeordnet. Die Austrittsöffnung für den Gassack (5) liegt in Fahrtrichtung zwischen dem Kopf des Fahrzeuginsassen und der unmittelbar benachbarten Seitenstruktur des Personenkraftwagens.

Die mit der Erfindung erzielten Vorteile bestehen insbesondere darin, daß im wesentlichen drei Einzelteile mit wenigen Fertigungsschritten zu einer Airbag-Baueinheit verbunden werden können, die eine montagegerechte Gestaltung der Fügestellen und Fügeteile besitzt, gut handhabbar ist und mit wenigen Handgriffen an einer Trägerstruktur sicher befestigt werden kann.

## Patentansprüche

1. Airbag-Baueinheit, deren an einer Trägerstruktur befestigter Gasgenerator (1) mit dem Gassack (5) und der Abdeckkappe (6) für den Gassack verbunden ist, dadurch gekennzeichnet, daß der Gasgenerator (1) im Bereich der Gasaustrittsöffnung einen festen Flansch (3) mit mehreren auf der Rückseite angeordneten festen, mit der Trägerstruktur verbindbaren Gewindebolzen (4) aufweist, der Gassack (5) auf den Flansch und auf die Gasaustrittsöffnung (2) des Gasgenerators (1) gefaltet ist, die offene Bodenfläche der Abdeckkappe (6) durch einen Innenflansch (7) begrenzt ist, der Gassack in seiner die Gaseintrittsöffnung begrenzenden Randzone und der Innenflansch mit Durchgangslöchern, durch die die Gewindebolzen gesteckt sind, versehen sind.

2. Airbag-Baueinheit nach Anspruch 1, dadurch gekennzeichnet, daß der mit dem Gassack (5) vernähte oder stoffschlüssig darin eingespritzte Deckel (9) der Abdeckkappe (6) eine am Deckelrand umlaufende Sollreißlinie (12) besitzt.

3. Airbag-Baueinheit nach Anspruch 1, dadurch gekennzeichnet, daß der Deckel (9) der Abdeckkappe (6) entlang einer Kante (10) gelenkartig und entlang der übrigen Kanten durch eine Sollreißlinie (12) mit dem Mantel (11) der Abdeckkappe verbunden ist.
